# EUROPÄISCHE PATENTSCHRIFT

(11) **EP 0 798 198 B1**
(45) Veröffentlichungstag und Bekanntmachung des Hinweises auf die Patenterteilung: **29.03.2000**
(21) Anmeldenummer: 97101664.7
(22) Anmeldetag: 04.02.1997
(51) Int. Cl.: B62D 33/067

(54) **Vordere Lagerung des kippbaren Fahrerhauses eines Lastkraftwagens**
Front bearing for tilt cab truck
Palier avant pour la cabine basculante d'un camion

(30) Priorität: 29.03.1996 DE 19612502
(43) Veröffentlichungstag der Anmeldung: 01.10.1997
(73) Patentinhaber: MAN Nutzfahrzeuge Aktiengesellschaft, 80976 München (DE)
(72) Erfinder: Rieck, Gerhard, Dipl.-Ing., 81247 München (DE); Harmeier, Reinhard, Dipl.-Ing., 82194 Gröbenzell (DE); Kienast, Frank, Dipl.-Ing., 85276 Pfaffenhofen (DE); Wunderlich, Walter, Dipl.-Ing., 4441 Behamberg (AT)

(56) Entgegenhaltungen:
- AT-A- 311 811
- DE-A- 2 161 953
- DE-A- 3 402 070
- FR-A- 2 573 717
- PATENT ABSTRACTS OF JAPAN vol. 008, no. 160 (M-312), 25.Juli 1984 & JP 59 057071 A (HINO JIDOSHA KOGYO KK), 2.April 1984,

## Beschreibung

Die Erfindung betrifft eine vordere Lagerung des kippbaren Fahrerhauses eines Lastkraftwagen mit Merkmalen der im Oberbegriff des Anspruches 1 angegebenen Art.

Die Erfindung geht aus von einer aus der DE 34 02 070 C2 bekannten vorderen Fahrerhaus-Lagerung. Diese umfaßt zwei Feder-Dämpfer-Beine, von denen jedes unten an einem rahmenfesten Lagerbock und oben an einer Konsole angelenkt ist, auf der das Fahrerhaus bodenseitig abgestützt und befestigt ist. Hinten ist an der Konsole ein etwa Z-förmig gebogener, seitlich aus dem Bereich der Konsole heraus und nach vorne geführter Lenker angelenkt. Vorn ist dieser Lenker an einer Querstabilisatorstange angeschlossen, die wiederum mit jedem ihrer beiden Enden in einem rahmenfesten Lagerbock axial gesichert aufgenommen und mithin ortsfest mit dem Fahrgestell-Rahmen verbunden ist. Diese an Serienfahrzeugen der Anmelderin realisierte vordere Fahrerhaus-Lagerung hat sich in der Praxis bewährt, erfordert aber relativ viel Bauraum und eine bestimmte Anzahl, vergleichsweise teurer Einzelteile.

Eine ähnlich bauaufwendige vordere Fahrerhaus-Lagerung ist aus der DE 42 40 449 A1 bekannt.

Es ist ausgehend von diesem Stand der Technik Aufgabe der Erfindung, eine vordere Fahrerhaus-Lagerung zu schaffen, die aus raumsparenden und auch billig herzustellenden Bauteilen besteht und es zudem ermöglicht, gewisse Sicherheitsaspekte zu berücksichtigen.

Diese Aufgabe ist erfindungsgemäß durch eine Fahrerhaus-Lagerung mit Merkmalen der im Anspruch 1 angegebenen Art gelöst.

Vorteilhafte Ausgestaltungen dieser Lösung sind in den Unteransprüchen angegeben.

Wie durch einen einfachen Vergleich zwischen den eingangs diskutierten bekannten Fahrerhaus-Lagerungen und der erfindungsgemäßen Fahrerhaus-Lagerung unschwer feststellbar ist, nimmt die erfindungsgemäße Lösung sowohl in Höhe als auch Breite wesentlich weniger Bauraum in Anspruch, insbesondere wegen der Ausgestaltung und Anlenkung der Konsolen und Längslenker. Mit besonderem Vorteil lassen sich die Längslenker auch so gestalten, wie in den Ansprüchen 4 und 5 angegeben, mit der Folge einer wesentlich höheren Crash-Sicherheit als bisher. Zum Vergleich: Bei der Lösung gemäß der DE 34 02 070 C2 sind die die Querstabilisatorstange tragenden Lagerböcke relativ weit vor den Konsolen und zudem rahmenfest angeordnet. Diese ortsfesten Lagerböcke bilden daher in Verbindung mit der Querstabilisatorstange eine relativ steife Barriere, die bei einem Frontalaufprall des Lastkraftwagen auf ein Hindernis ihre Normallage nicht oder nur wenig verändert. Das heißt, das Fahrerhaus ist relativ steif mit dem Fahrgestell verbunden und im Crash-Fall wirken die Beschleunigungskräfte praktisch voll auf den Fahrer und Beifahrer. Ganz anders dagegen sehen die Verhältnisse aus, wenn bei der erfindungsgemäßen Lösung entsprechend gekrümmte Längslenker verwendet werden, denn diese verformen sich dann energieverzehrend im Sinne einer stärkeren Mittelteilkrümmung. Die Folge ist ein gewisser Versatz des Fahrerhauses nach hinten, wodurch sich die Kräfte nicht in dem Maße wie bisher auf Fahrer- und Beifahrer auswirken können.

Nachstehend ist die Erfindung anhand eines in der Zeichnung dargestellten Ausführungsbeispieles noch näher erläutert. In der Zeichnung zeigen:

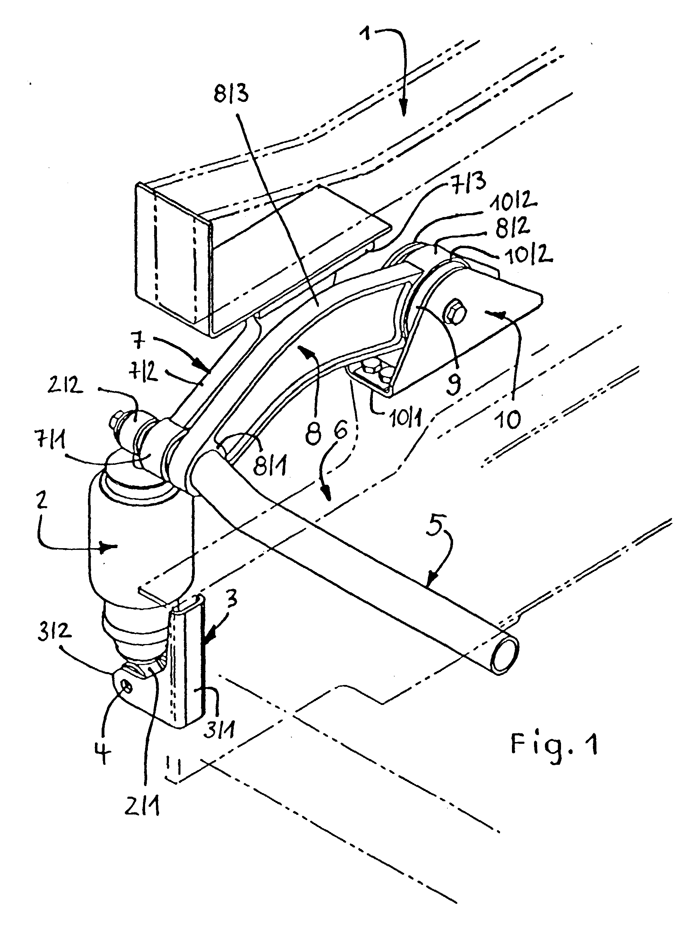

- Fig. 1: perspektivisch die eine Seite einer vorderen Lagerung für ein kippbares Fahrerhaus eines Lastkraftwagen erfindungsgemäßer Bauart,

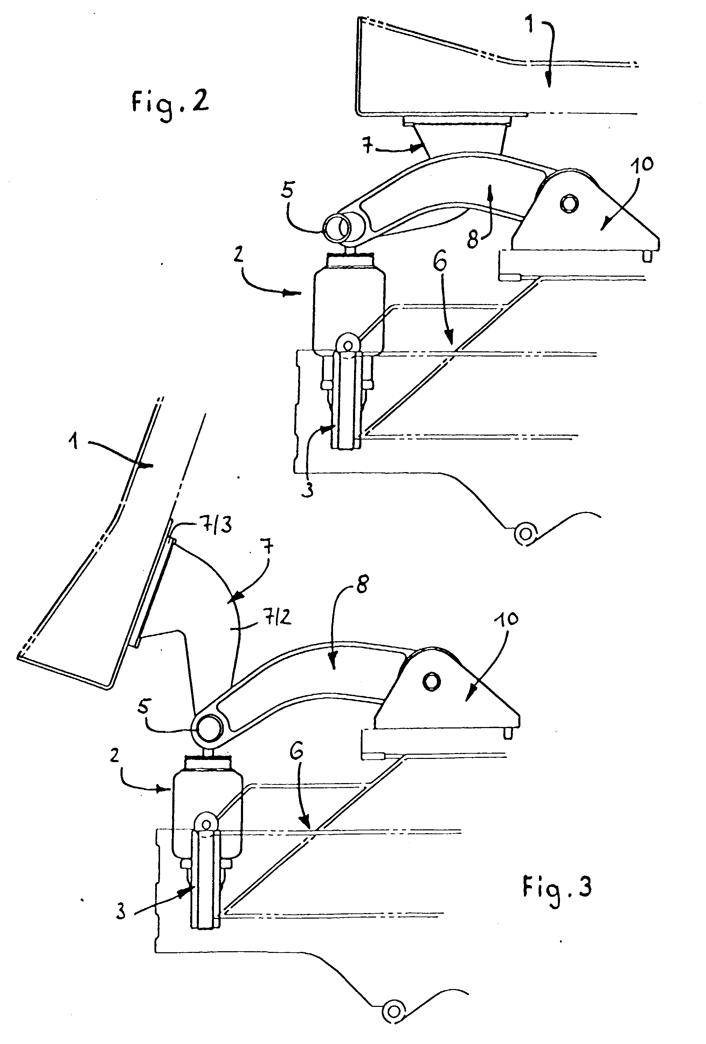

- Fig. 2: die Lagerung gemäß Fig. 1 in Seitenansicht von Fahrzeugmitte aus betrachtet,
- Fig. 3: die Lagerung gemäß Fig. 1 in Seitenansicht von Fahrzeugmitte aus betrachtet, mit gekipptem Fahrerhaus, und
- Fig. 4A, 4B, 4C: die Lagerung gemäß Fig. 1 in Seitenansicht von Fahrzeugmitte aus betrachtet, und deren Veränderungen bei einem Frontalaufprall des Lastkraftwagen auf ein Hindernis.

In der Zeichnung ist das kippbare Fahrerhaus eines Lastkraftwagen der Frontlenker-Bauart nur durch einen in seinem Boden gegebenen Träger 1 angedeutet. Außerdem ist von der vorderen Lagerung des Fahrerhauses nur die eine Seite in der Zeichnung gezeigt, die andere Seite ist hierzu spiegelsymmetrisch ausgebildet und angeordnet. Im einzelnen umfaßt die vordere Fahrerhaus-Lagerung je Seite ein Feder-Dämpfer-Bein 2, das unten mit einem Lagerauge 2/1 an einem rahmenfesten Lagerbock 3, dort um eine zur Fahrzeuglängsachse parallele Achse 4 schwenkbar, und oben mit einem Lagerauge 2/2 am äußeren Endbereich einer Querstabilisatorstange 5 angelenkt ist.

Jeder der beiden Lagerböcke 3 ist mit einem Vertikalflansch 3/1 seitlich an einem Längsträger bzw. Längsträger-Teil 6 des Fahrgestell-Rahmens anliegend abgestützt und zum Beispiel mittels Schrauben oder Nieten befestigt. Zwischen unten seitlich auskragenden Wangen 3/2 des Lagerbockes 3 ist das untere Lagerauge 2/1 eines Feder-Dämpfer-Beins 2 mit integriertem Gummilager axial gesichert fixiert.

Die die beiden Feder-Dämpfer-Beine 2 verbindende Querstabilisatorstange 5 bildet das vordere Lagerorgan für das Fahrerhaus und gleichzeitig auch die Schwenkachse für dessen Kippen. Hierzu ist das Fahrerhaus über das vordere, durch ein Lagerauge 7/1 gebildete Ende einer an ihm bodenseitig, dort an einem Träger 1 befestigten Konsole 7 schwenkbar an der Querstabilisatorstange 5 angelenkt.

Außerdem ist die Lage des Fahrerhauses und der Feder-Dämpfer-Beine 2 gegenüber dem Fahrgestell-Rahmen über die Querstabilisatorstange 5 durch je Lagerseite einen Längslenker 8 stabilisiert. Dabei nimmt jeder Längslenker 8 mit seinem vorderen, durch ein Lagerauge 8/1 gebildeten Ende die Querstabilisatorstange 5 axial gesichert auf und ist mit seinem hinteren, durch ein Lagerauge 8/2 mit integriertem Lager 9 gebildeten Ende quer- und längsgeführt sowie schwenkbar in einem rahmenfesten Lagerbock 10 aufgenommen.

Jeder der beiden, einen Längslenker 8 hinten lagernden Lagerböcke 10 ist mit einer Grundplatte 10/1 an einem Längsträger oder Längsträger-Teil 6 des Fahrgestell-Rahmens aufsitzend befestigt, zum Beispiel mittels Schrauben oder Nieten, gegebenenfalls auch durch Anschweißen, und weist beiderseits der Grundplatte 10/1 nach oben abragende, parallele Seitenwangen 10/2 auf, zwischen denen das hintere Längslenker-Lagerauge 8/2 mit den parallelen Seitenflächen des darin eingelassenen Lagers 9 exakt seitengeführt eingepaßt ist.

Die Querstabilisatorstange 5 kann durch ein stabiles Stahlrohr gebildet, im wesentlichen gerade sein oder schwach gekröpfte, jedoch parallel zum Mittelbereich verlaufende Endbereiche (wie dargestellt) haben.

An jedem der beiden Endbereiche der Querstabilisatorstange 5 sind - von außen nach innen gesehen - außen ein Feder-Dämpfer-Bein 2 mit seinem oberen, ein flexibles Lager beinhaltenden Lagerauge 2/2 axial fixiert angelenkt, einwärts unmittelbar daneben eine Konsole 7 mit ihrem vorderen Lagerauge 7/1 gelagert und einwärts unmittelbar daneben ein Längslenker 8 mit seinem vorderen Lagerauge 8/1 axial fixiert angeschlossen.

Jede der beiden Konsolen 7 besteht aus einem schlanken, längsgestreckten Tragarm 7/2 mit dem an seinem vorderen Ende angeordneten Lagerauge 7/1 und einem am hinteren Endbereich auf erhöhtem Niveau gegebenen Stützteller 7/3, auf dem das Fahrerhaus mit dem in seinem Boden gegebenen Träger 1 aufsitzt und befestigt ist, zum Beispiel durch Schrauben, Nieten oder Schweißen.

Jeder der beiden Längslenker 8 besteht aus einem stabförmigen, der Länge nach bogenförmig gekrümmten Mittelteil 8/3 mit den vorn und hinten an diesem ausgebildeten Lageraugen 8/1 und 8/2.

Bei ungekipptem Fahrerhaus ist jede der beiden Konsolen 7 mit ihrem Tragarm 7/2 im wesentlichen parallel zum Mittelteil 8/3 des benachbart angeordneten Längslenkers 8 verlaufend angeordnet und dementsprechend ausgebildet.

Die beiden Konsolen 7 und die beiden Längslenker 8 der Fahrerhaus-Lagerung können entweder als Gesenkschmiedeteile oder als Gußteile oder als Blechpreßteile jeweils einstückig ausgeformt und dann an erforderlichen Stellen spanabhebend nachbearbeitet werden.

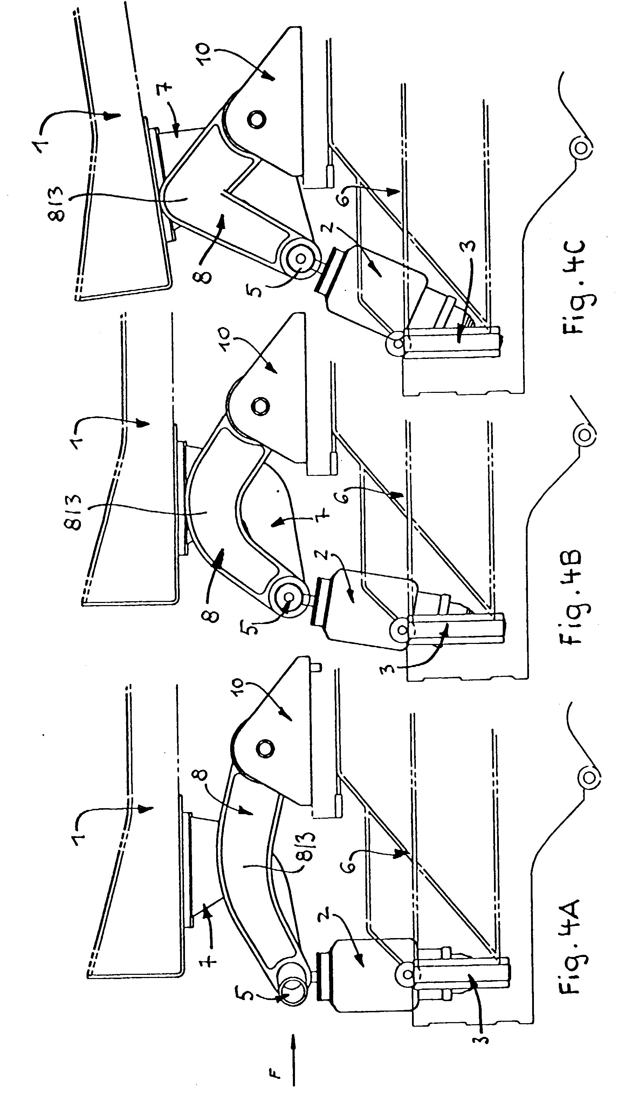

In besonders vorteilhafter Ausgestaltung ist das Mittelteil 8/3 jedes der beiden Längslenker 8 in Längsrichtung so stark bogenförmig nach oben oder unten gekrümmt ausgebildet, daß sich bei einem Frontalaufprall des Lastkraftwagen auf ein Hindernis und entsprechender Einwirkung einer Kraft F von vorn (siehe Fig. 4A) auf die Querstabilisatorstange 5 oder das Fahrerhaus die Längslenker 8 energieverzehrend gezielt im Sinne einer stärkeren Krümmung ihres Mittelteiles 8/3 verformen.

Die Figurenfolge von Fig. 4A über Fig. 4B nach Fig. 4C zeigt anschaulich die Formveränderungen der Längslenker 8 auf, ebenso die Lageveränderungen der Teile 2 mit 5 und 7, jedoch auch, daß das Fahrerhaus seine Normallage gegenüber dem Fahrgestell-Rahmen weitestgehend beibehält, also nicht bzw. nicht nennenswert nach hinten versetzt wird. Dies trägt in erheblichem Maße zur Erhöhung der Betriebssicherheit des Lastkraftwagen und zum Schutz von Fahrer und Beifahrer bei.

## Patentansprüche

1. Vordere Lagerung des kippbaren Fahrerhauses eines Lastkraftwagen mittels zweier Feder-Dämpfer-Beine (2), von denen jedes unten an einem rahmenfesten Lagerbock (3) und oben an einer Konsole (7) angelenkt ist, auf der das Fahrerhaus bodenseitig befestigt ist, gekennzeichnet durch folgende Merkmale:
a) jedes Feder-Dämpfer-Bein (2) ist oben an einem Endbereich einer Querstabilisatorstange (5) angelenkt,
b) die Querstabilisatorstange (5) bildet das vordere Lagerorgan für das Fahrerhaus (1) und gleichzeitig auch die Schwenkachse für dessen Kippen, wobei das Fahrerhaus über das vordere Ende (7/1) der an ihm befestigten Konsole (7) schwenkbar an der Querstabilisatorstange (5) angelenkt ist,
c) die Lage des Fahrerhauses (1) und der Feder-Dämpfer-Beine (2) ist gegenüber dem Fahrgestell-Rahmen über die Querstabilisatorstange (5) durch zwei Längslenker (8) stabilisiert, von denen jeder mit seinem vorderen Ende (8/1) die Querstabilisatorstange (5) axial gesichert aufnimmt und mit seinem hinteren Ende (8/2) über ein integriertes Lager (9) quer- und längsgeführt sowie schwenkbar in einem rahmenfesten Lagerbock aufgenommen ist.

2. Fahrerhaus-Lagerung nach Anspruch 1, dadurch gekennzeichnet, daß die Querstabilisatorstange (5) im wesentlichen gerade ausgebildet ist und an jedem der beiden Endbereiche außen ein Feder-Dämpfer-Bein (2) mit seinem oberen Lagerauge (2/2) axial fixiert angelenkt, einwärts unmittelbar daneben eine Konsole (7) mit ihrem vorderen, durch ein Lagerauge (7/1) gebildeten Ende gelagert und einwärts unmittelbar daneben ein Längslenker (8) mit seinem durch ein Lagerauge (8/1) gebildeten Ende axial fixiert angeschlossen sind.

3. Fahrerhaus-Lagerung nach einem der vorhergehenden Ansprüche, dadurch gekennzeichnet, daß jede der beiden Konsolen (7) aus einem schlanken längsgestreckten Tragarm (7/2) mit einem am vorderen Ende angeordneten Lagerauge (7/1) und einem am hinteren Endbereich auf erhöhtem Niveau gegebenen Stützteller (7/3) besteht, auf dem das Fahrerhaus mit einem in seinem Boden gegebenen Träger (1) aufsitzt und befestigt ist.

4. Fahrerhaus-Lagerung nach einem der vorhergehenden Ansprüche, dadurch gekennzeichnet, daß jeder der beiden Längslenker (8) aus einem stabförmigen, der Länge nach bogenförmig gekrümmten Mittelteil (8/3) mit vorn und hinten an diesem ausgebildeten Lageraugen (8/1, 8/2) besteht.

5. Fahrerhaus-Lagerung nach Anspruch 4, dadurch gekennzeichnet, daß das Mittelteil (8/3) jedes der beiden Längslenker (8) in Längsrichtung so stark bogenförmig nach oben oder unten gekrümmt ausgebildet ist, daß sich bei einem Frontalaufprall des Lastkraftwagen auf ein Hindernis und entsprechender Einwirkung einer Kraft von vorn auf die Querstabilisatorstange (5) bzw. das Fahrerhaus die Längslenker (8) energieverzehrend gezielt im Sinne einer stärkeren Krümmung ihres Mittelteiles (8/3) verformen.

6. Fahrerhaus-Lagerung nach einem der vorhergehenden Ansprüche, dadurch gekennzeichnet, daß bei ungekipptem Fahrerhaus jede der beiden Konsolen (7) mit ihrem Tragarm (7/2) im wesentlichen parallel zum Mittelteil (8/3) des benachbart angeordneten Längslenkers (8) verlaufend angeordnet und entsprechend ausgebildet ist.

7. Fahrerhaus-Lagerung nach einem der vorhergehenden Ansprüche, dadurch gekennzeichnet, daß die beiden Konsolen (7) und die beiden Längslenker (8) entweder als Gesenkschmiedeteile oder als Gußteile oder als Blechpreßteile jeweils einstückig ausgeformt und dann an erforderlichen Stellen spanabhebend nachbearbeitet sind.

8. Fahrerhaus-Lagerung nach einem der vorhergehenden Ansprüche, dadurch gekennzeichnet, daß jeder der beiden einen Längslenker (8) hinten lagernden Lagerböcke (10) mit einer Grundplatte (10/1) an einem Längsträger bzw. Längsträger-Teil (6) des Fahrgestell-Rahmens aufsitzend befestigt ist und beiderseits der Grundplatte (10/1) nach oben abragende, parallele Seitenwangen (10/2) aufweist, zwischen denen das am hinteren Ende eines Längslenkers (8) gegebene Lagerauge (8/2) mit den parallelen Seitenflächen des darin eingelassenen Lagers (9) exakt seitengeführt eingepaßt ist.

## Claims

1. Front mounts of the tilting cab of a truck which are designed as two spring damper legs (2), each of which is located, at its lower end, on a support block (3) and, at its upper end, on a console (7) to which the bottom of the cab is fastened, characterised in that
a) each spring damper leg (2) is, at its upper end, located movably on an end portion of a stabiliser bar (5),
b) the stabiliser bar (5) forms the front support organ for the cab (1) and simultaneously also the swivelling axis for the cab's tilting movements, the cab being slewably located on stabiliser bar (5) via the front end (7/1) of the console (7) attached to the cab,
c) the position of the cab (1) and of the spring damper legs (2) is, relative to the chassis frame, stabilised via the stabiliser bar (5) by means of two longitudinal arms (8), each of which holds with its front end (8/1) the stabiliser bar (5) in an axially secured manner and is located with its rear end (8/2) in transverse and longitudinal directions via an integrated bearing (9) and is slewably supported in a support block firmly attached to the frame.

2. Cab mounts according to Claim 1, characterised in that the stabiliser bar (5) is designed as a basically straight piece and that a spring damper leg (2) with its upper bearing eye (2/2) is axially fixed and located on the outside of each of the two end areas of said stabiliser bar (5) and that towards the inside, directly adjacent to said spring damper leg (2), a console (7) with its front end designed as a bearing eye (7/1) is supported on each of the two end areas of said stabiliser bar (5) and that towards the inside, directly adjacent to said console (7), a longitudinal arm (8) with its end designed as a bearing eye (8/1) is axially fixed and connected to each of the two end areas of said stabiliser bar (5).

3. Cab mounts according to one of the foregoing Claims, characterised in that each of the two consoles (7) consists of a slim, longitudinally extending support arm (7/2) with a bearing eye (7/1) arranged at its front end and a support plate (7/3) on a raised level at its rear end, a carrier (1) in the bottom of the cab being supported on and connected to said support plate (7/3).

4. Cab mounts according to one of the foregoing Claims, characterised in that each of the two longitudinal arms (8) consists of a rod-shaped centre portion (8/3) curved in longitudinal direction and with bearing eyes (8/1, 8/2) provided on the front and rear ends of said centre portion (8/3).

5. Cab mounts according to Claim 4, characterised in that the centre portion (8/3) of each of the two longitudinal arms (8) is, in longitudinal direction, curved upwards or downwards to such a degree that, in the event of a frontal collision of the truck against an obstacle and a corresponding impact of a force acting from the front on the stabiliser bar (5) and on the cab, the longitudinal arms (8) deform themselves in an energy-consuming manner specifically in the sense of an intensification of the curve of their centre portion (8/3).

6. Cab mounts according to one of the foregoing Claims, characterised in that if the cab is not tilted each of the two consoles (7) with its support arm (7/2) is arranged and correspondingly designed to run basically parallel to the centre portion (8/3) of the adjacent longitudinal arm (8).

7. Cab mounts according to one of the foregoing Claims, characterised in that each of the two consoles (7) and the two longitudinal arms (8) are single pieces designed as either drop-forged or cast or pressed sheet metal parts and are afterwards machined where necessary.

8. Cab mounts according to one of the foregoing Claims, characterised in that each of the two support blocks (10) supporting the rear end of a longitudinal arm (8) is at its base plate (10/1) supported on and fastened to a longitudinal arm or longitudinal arm portion (6) of the chassis frame and has upward-projecting, parallel lateral walls (10/2) on both sides of the base plate (10/1), between which walls (10/2) the bearing eye (8/2) which is provided on the rear end of a longitudinal arm (8) is, together with the parallel lateral faces of the bearing (9) inserted in it, installed in an exactly laterally located manner.

## Revendications

1. Suspension avant de la cabine basculante d'un camion, comprenant deux jambes élastiques amorties (2) dont chacune est articulée en bas à une chaise de palier (3) et en haut à une console (7) sur laquelle repose, vers son plancher, la cabine,
présentant les caractéristiques suivantes :
a) chaque jambe élastique amortie (2) est articulée en haut, dans sa zone d'extrémité, à une barre stabilisatrice transversale (5),
b) la barre stabilisatrice transversale (5) constitue l'organe de suspension avant de la cabine (1) et en même temps l'axe de basculement de celle-ci qui est articulée sur la barre stabilisatrice (5) de manière à pouvoir basculer, par l'intermédiaire de l'extrémité avant de la console (7) fixée à la cabine,
c) la position par rapport au châssis du véhicule de la cabine (1) et des jambes élastiques amorties (2), est, par l'intermédiaire de la barre intermédiaire (5), stabilisée par deux bras longitudinaux (8) dont chacun, par son extrémité avant (8/1) sert de logement à la barre stabilisatrice (5) en le fixant axialement tandis qu'à son extrémité arrière (8/2), par l'intermédiaire d'un palier intégré (9) le bras est logé en étant guidé transversalement et longitudinalement tout en pouvant basculer dans une chaise de palier.

2. Suspension de cabine selon la revendication 1,
caractérisée en ce que
la barre stabilisatrice transversale (5) est droite dans sa plus grande partie et à chacune de ses deux extrémités une jambe élastique amortie (2) est articulée et fixée axialement par un anneau de palier (2/2), et directement à côté une console (7) est montée par son extrémité avant constituée par un anneau de palier (7/1) côtoyant lui-même directement un bras longitudinal (8) fixé axialement sur la barre par son extrémité formée en anneau de palier (8/1).

3. Suspension de cabine selon une des revendications précédentes,
caractérisée en ce que
chacune des deux consoles (7) est constituée par un bras longitudinal porteur (7/2), allongé, portant à son extrémité avant un anneau de palier (7/1) et, vers son extrémité arrière et à un niveau plus élevé, un plateau de soutien (7/2) sur lequel repose et est fixée la cabine, par l'intermédiaire d'un support (1) logé dans son plancher.

4. Suspension de cabine selon une des revendications précédentes,
caractérisée en ce que
chacun des deux bras longitudinaux (8) est composé d'une partie centrale ayant la forme d'une barre dont la partie centrale (8/3) est courbée en arc dans sa longueur et porte en avant et en arrière des anneaux de palier (8/1, 8/2) formés dans la pièce.

5. Suspension de cabine selon la revendication 4,
caractérisée en ce que
la partie centrale (8/3) de chaque bras longitudinal (8) est courbée en direction longitudinale vers le haut ou vers le bas de manière qu'en cas de choc du camion sur un obstacle et action correspondante par l'avant, d'une force sur la barre stabilisatrice (5) ou sur la cabine, les bras longitudinaux (8) se déforment par augmentation forte de leur courbure, en consommant de l'énergie, conformément au but recherché.

6. Suspension de cabine selon une des revendications précédentes,
caractérisée en ce que
quand la cabine n'est pas basculée, chacune des deux consoles (7) a son bras porteur (7/2) sensiblement parallèle à la partie centrale (8/3) du bras longitudinal (8) voisin et a une forme correspondante.

7. Suspension de cabine selon une des revendications précédentes,
caractérisée en ce que
les deux consoles (7) et les deux bras longitudinaux (8) peuvent être constitués chacun d'une seule pièce réalisée par formage, matricée ou coulée ou en tôle emboutie, puis usinée par enlèvement de copeaux là où c'est nécessaire.

8. Suspension de cabine selon une des revendications précédentes,
caractérisée en ce que
chacune des deux chaises (10) portant la partie arrière d'un bras longitudinal (8) est fixée par une plaque de base (10/1) en appui sur un longeron ou une partie de longeron (6) du châssis de véhicule et comprend de chaque côté de la plaque (10/1) des parois latérales parallèles (10/2), dirigées vers le haut et entre lesquelles l'anneau de palier (8/2) d'un bras longitudinal est monté avec les portées latérales parallèles du palier intégré (9) ajustées de manière à assurer un guidage latéral exact.
